# EUROPEAN PATENT SPECIFICATION

(11) **EP 1 444 940 B1**
(45) Date of publication and mention of the grant of the patent: **16.11.2005**
(21) Application number: 03257576.3
(22) Date of filing: 02.12.2003
(51) Int. Cl.: A47J 37/06

(54) **Grill unit, method of manufacturing the grill unit and cooking apparatus with the grill unit**
Grilleinheit, Verfahren zum Erstellen derselben und Kochvorrichtung mit derselben
Unité gril, procédé de fabrication de la même et appareil de cuisson avec la même

(30) Priority: 06.02.2003 KR 2003007555
(43) Date of publication of application: 11.08.2004
(73) Proprietor: Samsung Electronics Co., Ltd., Suwon-City, Kyungki-Do (KR)
(72) Inventor: Han, Dae-Sung, Hwasung-City Kyungki-Do (KR); Kim, Chul, Yongin-City Kyungki-Do (KR); Han, Yong-Woon, Kunpo-City Kyungki-Do (KR); Jang, Seong-Deog, Suwon-City Kyungki-Do (KR); Hahm, Kyung-Hee, Youngdungpo-Gu Seoul (KR); Yeo, Joo-Yeong, Hwasung-City Kyungki-Do (KR); Kang, Han-Seong, Paldal-Gu, Suwon City Kyungki-Do (KR)
(74) Representative: Robinson, Ian Michael

(56) References cited:
- US-A- 5 189 945
- PATENT ABSTRACTS OF JAPAN vol. 2003, no. 04, 2 April 2003 (2003-04-02) & JP 2002 355178 A (KONDO HIRONOBU), 10 December 2002 (2002-12-10)

## Description

The present invention relates, in general, to a grill unit, a method of manufacturing the grill unit, and a cooking apparatus with the grill unit, and, more particularly, to a grill unit which may be easily manufactured at a low cost, a method of manufacturing the grill unit, and a cooking apparatus with the grill unit.

Generally, it is well known that meat or processed meat, such as sausage, is most delicious when grilled. Therefore, persons enjoy cooking meat or processed meat using a cooking apparatus with a grill unit and eating the cooked meat or processed meat.

The cooking apparatus for this kind of cooking includes a heating unit for directly applying heat to food, and a grill unit mounted on top of the heating unit to support food while spacing the food apart from the heating unit. This structure allows food put on the grill unit to be heated by heat transferred from the heating unit. However, when cooking is performed using the cooking apparatus equipped with a grill unit, high temperature heat is directly transferred from the heating unit to the grill unit, so the part of food in contact with the grill unit easily burns, thus deteriorating the taste of the food and negatively affecting the health of those eating the burned food.

Document US-A-5189945 discloses a grill unit according to the preamble of independent claim 1.

An aim of the present invention is to provide a grill unit that may be easily manufactured at a low cost, a method of manufacturing the grill unit, and a cooking apparatus with the grill unit.

Other aims and/or advantages of the invention will be set forth in part in the description that follows and, in part, will be obvious from the description, or may be learned by practice of the invention.

According to the present invention there is provided an apparatus and method as set forth in the appended claims. Preferred features of the invention will be apparent from the dependent claims, and the description which follows.

In one aspect of the present invention there is provided a grill unit according to independent claim 1.

Each end of each of the grill pipes preferably comprises a laterally extended part with a predetermined length, an upwardly extended part upwardly bent and extended from the laterally extended part and opened at a top thereof to interface with an inside of a corresponding one of the water tanks.

Preferably each of the water tanks has a lower portion and a side portion, with the lower portion of each of the water tanks, which receives the ends of the grill pipes, being thicker than the side portion.

The grill may include covers over each of the water tanks to selectively open and close each of the water tanks.

Preferably each of the grill pipes has a horizontally extended part on which food is placed that is bent to be positioned lower than both ends of the grill pipes connected to the water tanks to position the food near a heating source arranged below the food.

The grill unit may include a transparent window on at least one of the water tanks to ascertain a water level inside the at least one of the water tanks.

The grill unit may include a transparent pipe connected to at least one of the water tanks, the ends of the transparent pipe entering an inside of the water tank to ascertain a water level inside the at least one of the water tanks.

In another aspect of the present invention there is provided a method of manufacturing a grill unit according to independent claim 1.

The grill unit manufacturing method includes cutting a pipe into the plurality of grill pipes, each grill pipe having a predetermined length, and upwardly bending the ends of the grill pipes before inserting and fixing the ends of the grill pipes in the at least one of the metallic molds.

Also according to the present invention there is provided a cooking apparatus according to independent claim 10.

Further, according to the present invention there is provided a method of manufacturing a grill unit according to independent claim 18 tank after the resin has solidified, with the horizontally extended part being lower than the water tank.

For a better understanding of the invention, and to show how embodiments of the same may be carried into effect, reference will now be made, by way of example, to the accompanying diagrammatic drawings in which:
Figure 1 is an exploded perspective view of a cooking apparatus with a grill unit according to the present invention;
Figure 2 is a sectional view showing the construction of the grill unit of the present invention;
Figure 3 is a detailed sectional view showing a part of the grill unit indicated by portion III of Figure 2;
Figure 4 is a view showing a process of manufacturing the grill unit of the present invention;
Figure 5 is a perspective view showing the construction of a transparent window on a water tank of the grill unit of the present invention; and
Figure 6 is a perspective view showing the construction of a transparent pipe on the water tank of the grill unit of the present invention.

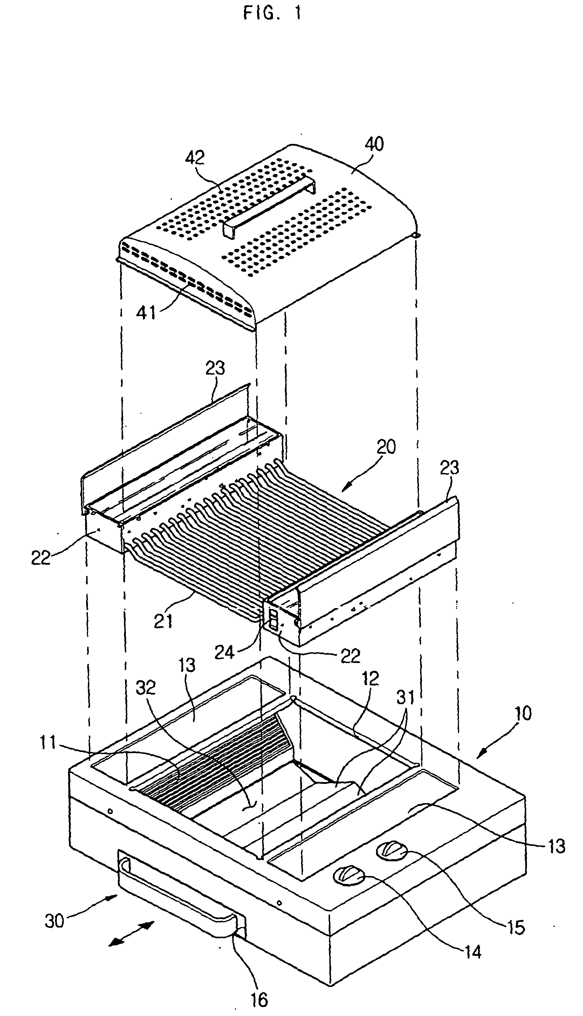

As shown in Figure 1, a cooking apparatus with a grill unit according to the preferred embodiment of the present invention includes a cabinet 10 formed in a box shape, and a grill unit 20 mounted on a top of the cabinet 10 to grill food put on the grill unit 20. Further, the cooking apparatus includes a plurality of heaters 11 mounted in the cabinet 10 to heat food put on the grill unit 20, a heat reflecting member 30 that guides the heat from the heaters 11 to the food on the grill unit 20 and collects oil dripping from the food, and a cover member 40 that covers the upper portion of the grill unit 20 and has a plurality of holes 41 and 42 perforated therethrough.

The cabinet 10 has an opening 12 formed in the top thereof to allow heat generated by the heaters 11 mounted in the cabinet 10 to be transferred to the grill unit 20. Grill seats 13, each with a predetermined area, are formed on both sides of the top surface of the cabinet 10 around the opening 12 to allow the grill unit 20 to be seated thereon. Further, a timer switch 14 and a power switch 15 are provided at a certain portion of a top surface of the cabinet 10 to control the heating time and the heating temperature of the heaters 11, respectively. An opening 16 is formed in a lower portion of the front of the cabinet 10 so that the heat reflecting member 30 may be moved into and out of the cabinet 10 through the opening 16, similar to the operation of a drawer.

The heaters 11 are set within both sides of the cabinet 10, that is, below the grill seats 13, to heat food put on the grill unit 20, and are inclined at a predetermined angle such that heating surfaces of the heaters 11 face the opening 12 formed in the top of the cabinet 10. The heaters 11 each include a ceramic member in which heating elements are encapsulated to generate infrared rays with a high temperature. However, the heaters 11 may be implemented as gas heaters using gas, or as trays for holding charcoal.

The heat reflecting member 30 is constructed such that its axial center portion is projected upward to form a hill shape with a triangular cross-section, and both projected surfaces form reflecting surfaces 31 to allow heat generated by the heaters 11 to be reflected to the grill unit 20 arranged above the heaters 11. Further, recesses 32 are formed at bottoms of both projected surfaces to collect oil dripping from food put on the grill unit 20. Further, although not shown in Figure 1, a predetermined amount of water is contained in the heat reflecting member 30 to prevent the temperatures of the recesses 32 and the reflecting surfaces 31 from increasingly excessively, thus preventing oil collected in the recesses 32 from burning or adhering to the recesses 32.

The grill unit 20 includes a plurality of grill pipes 21 arranged in parallel with each other while being spaced apart from each other, water tanks 22 connected to both ends of the grill pipes 21 to supply water into the grill pipes 21 and provided with bottom surfaces seated on the grill seats 13 of the top surface of the cabinet 10, and covers 23 to selectively open and close upper portions of the water tanks 22.

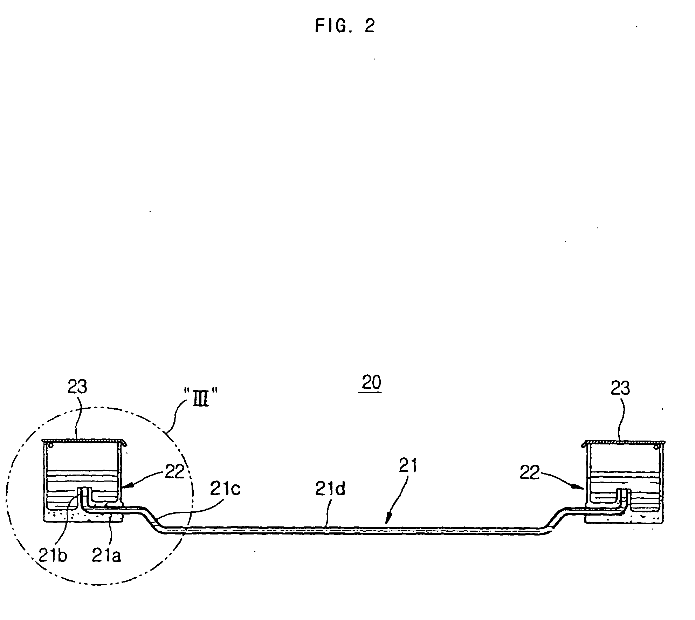

Further, as shown in Figure 2, the grill pipes 21 are made of a metallic material and the water tanks 22 on both sides thereof are manufactured through injection molding of a resin material. That is, after both ends of the grill pipes 21 are inserted into metallic molds used to mold the water tanks 22, the water tanks 22 are molded using injection molding so that both ends of the grill pipes 21, which are made of the metallic material, are integrally connected to the water tanks 22 made of the resin material.

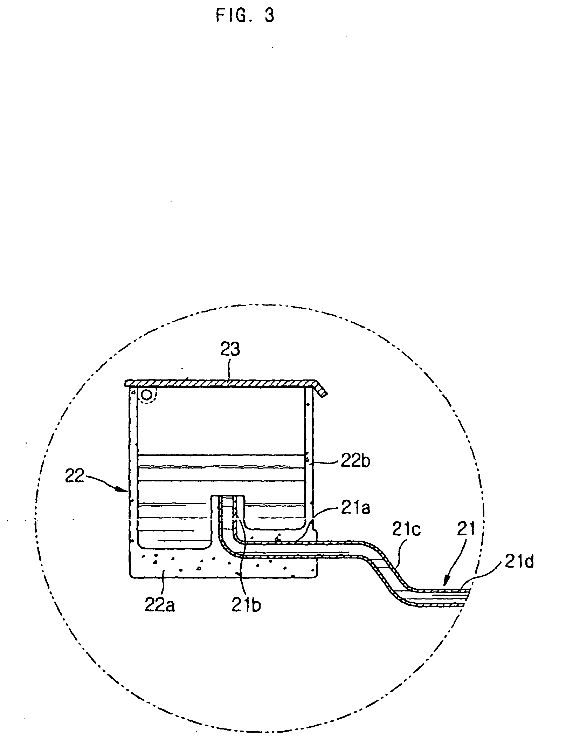

As shown in Figure 3, a lower portion 22a of each of the water tanks 22, into which the grill pipes 21 are inserted, is thicker than a side portion 22b thereof. Both ends of each of the grill pipes 21 inserted into the lower portions 22a of the water tanks 22 include a laterally extended part 21a that is laterally extended by a predetermined length, and an upwardly extended part 21b that is upwardly bent and extended from the laterally extended part 21a and open at the top thereof to interface with an inside of each of the water tanks 22. This construction reinforces the rigidity of portions where both ends of the grill pipes 21 and the water tanks 22 are connected to each other, which are kept watertight.

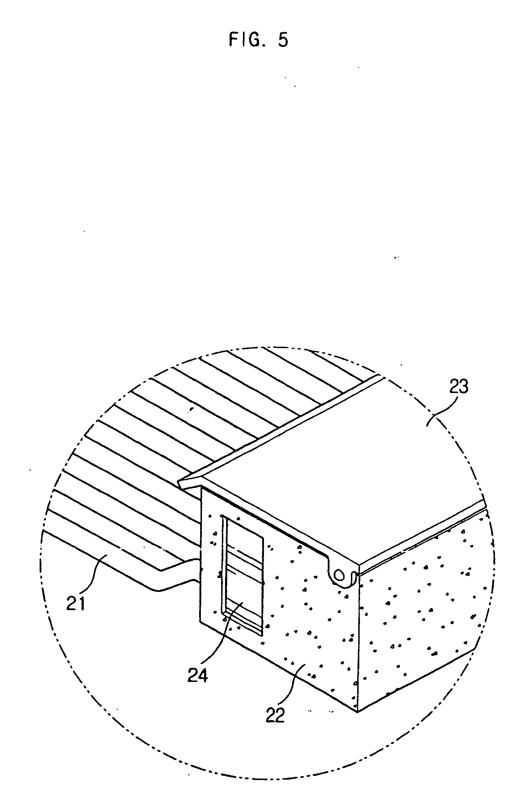

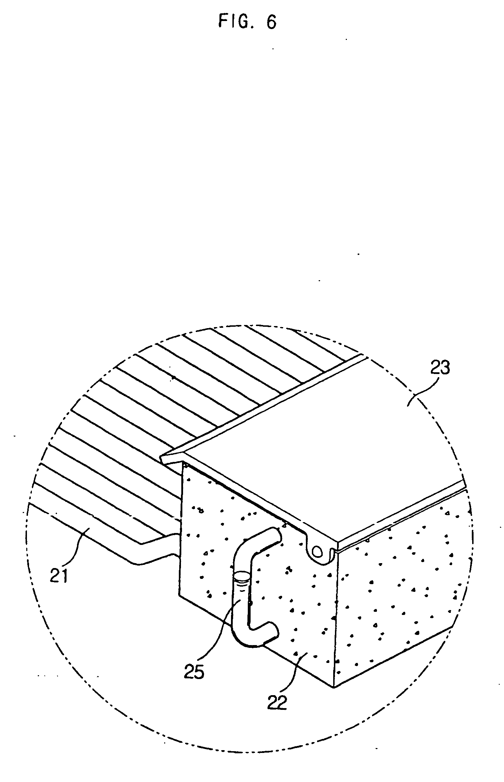

To enable a user to visually ascertain a level of water in the water tanks 22, a transparent window 24 (as shown in Figure 5) or a transparent pipe 25 (as shown in Figure 6) is provided on an outside surface of at least one of the water tanks 22. The transparent pipe 25 is connected to the water tank 22 so that upper and lower portions thereof connect to the inside of the water tank 22.

As shown in Figures 2 and 3, each of the grill pipes 21 has a horizontally extended part 21d on which food is placed. The horizontally extended part 21d is bent to be positioned lower than both ends of the grill pipes 21 connected to the water tanks 22 so that the food is positioned near the heaters 11 arranged below the food. That is, each of the grill pipes 21 has two inclined parts 21c downwardly bent at a predetermined angle and extended from end parts connected to the water tanks 22. Each of the grill pipes 21 is bent to be horizontally extended between the inclined parts 21c, so that the horizontally extended part 21d on which the food is placed is lower than the water tanks 20.

The above-described construction of the grill unit 20 prevents the grill pipes 21 from overheating by allowing water to flow into the grill pipes 21 from the water tanks 22, even though the grill pipes 21 are heated by heat transferred from the heaters 11 arranged below the grill unit 20 when the user grills food, thereby preventing the part of food in contact with the grill pipes 21 from burning. Also, the water tanks 22 are made of a resin material, rather than a metallic material, and are manufactured through injection molding so that the grill unit may be easily manufactured with reduced manufacturing costs relative to conventional grill units made of a metallic material. Further, the water tanks 22 are made of a resin material so that the temperature of the surface of the water tanks 22 is lower than that of water tanks made of a metallic material, thus increasing convenience and safety of use.

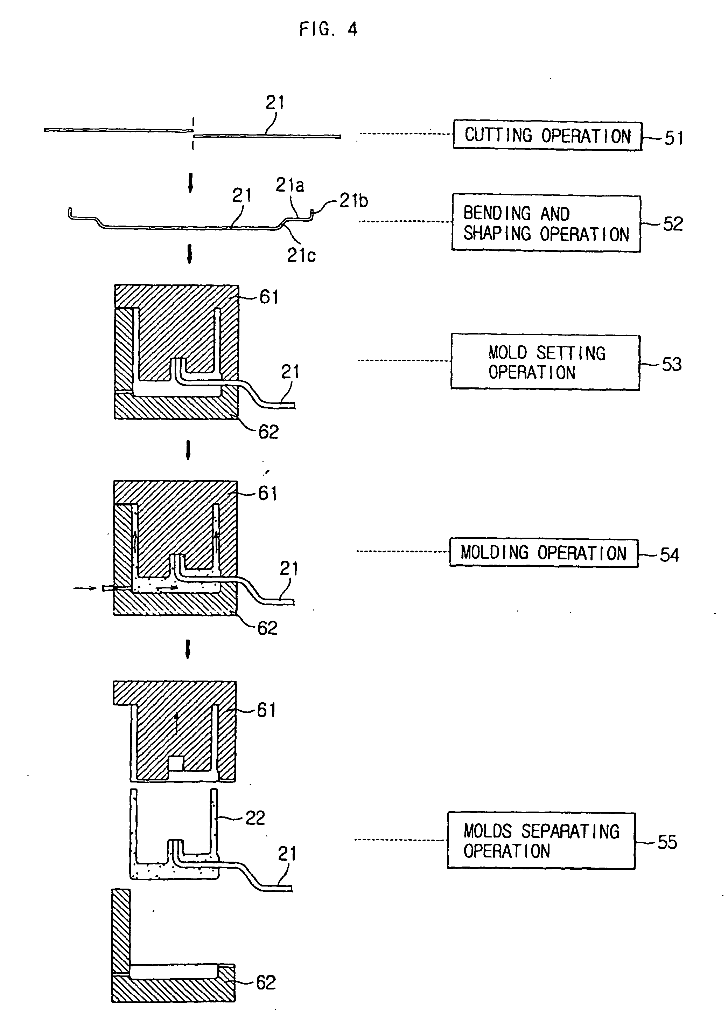

Referring to Figure 4, the grill unit 20 is manufactured by first performing a cutting operation 51 to cut a pipe made of stainless steel, for example, into a plurality of grill pipes 21 having an appropriate length. A bending and shaping operation 52 is performed to bend and shape the grill pipes 21 using a jig (not shown), for example, to form the upwardly extended parts 21b, the laterally extended parts 21a, the inclined parts 21c, and the horizontally extended part 21d for each of the grill pipes 21.

After the bending and shaping operation 52 is performed, a mold setting operation 53 is performed to insert both ends of the grill pipes 21 into respective pairs of an upper metallic mold 61 and a lower metallic mold 62 used to mold the water tanks 22. The upper metallic mold 61 and the lower metallic mold 62 are detachably connected to each other.

After the metallic molds 61 and 62 have been set, a molding operation 54 is performed using an injecting device (not shown) to inject molten resin into an empty space within the metallic molds 61 and 62. thus, both ends of the grill pipes 21, inserted into the metallic molds 61 and 62 in advance, are embedded in the molten resin.

After the molten resin, which has been injected into the metallic molds 61 and 62, has solidified to form the water tanks 22, a molds separating operation 55 is performed to separate the metallic molds 61 and 62. Finally, after the covers 23 are respectively installed over an upper opening of each of the water tanks 22, the manufacture of the grill unit 20 is completed.

As is apparent from the above description, the present invention provides a grill unit in which water tanks, which are conventionally made of a metallic material, are made of a resin material through injection molding, thus enabling easy manufacture of the grill unit and greatly reduced manufacturing costs relative to conventional grill units.

Further, the present invention is advantageous in that the water tanks of the grill unit are made of a resin material so that the temperature of the surface of the water tanks is lower than that of water tanks made of a metallic material, thus increasing convenience and safety of use.

Although a few preferred embodiments have been shown and described, it will be appreciated by those skilled in the art that various changes and modifications might be made without departing from the scope of the invention, as defined in the appended claims.

## Claims

1. A grill unit, comprising:
a plurality of grill pipes (21) made of a metallic material and spaced apart from each other; and
water tanks (22) connected to both ends of the grill pipes (21), to supply water into the grill pipes (21), **characterised in that** the water tanks are made of a resin material.

2. The grill unit according to claim 1, wherein each end of each of the grill pipes (21) comprises a laterally extended part (21a) with a predetermined length, an upwardly extended part (21b) upwardly bent and extended from the laterally extended part (21a) and opened at a top thereof to interface with an inside of a corresponding one of the water tanks (22).

3. The grill unit according to claim 2, wherein each of the water tanks (22) has a lower portion (22a) and a side portion (22b), with the lower portion (22a) of each of the water tanks (22), which receives the ends of the grill pipes (21), being thicker than the side portion (22b).

4. The grill unit according to any preceding claim, further comprising covers (23) respectively over each of the water tanks (22) to selectively open and close each of the water tanks (22).

5. The grill unit according to any preceding claim, wherein each of the grill pipes (21) has a horizontally extended part (21d) on which food is placed that is bent to be positioned lower than both ends of the grill pipes (21) connected to the water tanks (22) to position the food near a heating source arranged below the food.

6. The grill unit according to any preceding claim, further comprising a transparent window (24) on at least one of the water tanks (22) to ascertain a water level inside the at least one of the water tanks (22).

7. The grill unit according to any preceding claim, further comprising a transparent pipe (25) connected to at least one of the water tanks (22), the ends of the transparent pipe (25) entering an inside of the water tank to ascertain a water level inside the at least one of the water tanks (22).

8. A method of manufacturing a grill unit using metallic molds, the grill unit (20) having a plurality of metallic grill pipes (21) and a water tank, the method comprising:
fixing ends of a plurality of grill pipes (21) into at least one of the metallic molds used to mold the water tank, while maintaining the ends of the grill pipes (21) in the at least one of the metallic molds; and
molding the water tank by injecting molten resin into the at least one of the metallic molds.

9. The grill unit manufacturing method according to claim 8, further comprising cutting a pipe into the plurality of grill pipes (21), each grill pipe having a predetermined length, and upwardly bending the ends of the grill pipes (21) before inserting and fixing the ends of the grill pipes (21) in the at least one of the metallic molds.

10. A cooking apparatus, comprising:
a cabinet (10) having at least one heater (11); and
a grill unit (20) according to claim 1 mounted on a top surface of the cabinet (10) to support food.

11. The cooking apparatus according to claim 10, wherein each end of each of the grill pipes (21) comprises a laterally extended part (21a) with a predetermined length, an upwardly extended part (21b) upwardly bent and extended from the laterally extended part (21a) and opened at a top thereof to interface with an inside of a corresponding one of the water tanks (22).

12. The cooking apparatus according to claim 11, wherein each of the water tanks (22) has a lower portion (22a) and a side portion (22b), with the lower portion (22a) of each of the water tanks (22), which receives the ends of the grill pipes (21), being thicker than the side portion (22b).

13. The cooking apparatus according to any of claims 10 to 12, further comprising covers (23) respectively over each of the water tanks (22) to selectively open and close each of the water tanks (22).

14. The cooking apparatus according to any of claims 10 to 13, wherein each of the grill pipes (21) has a horizontally extended part (21d) on which food is placed that is bent to be positioned lower than both ends of the grill pipes (21) connected to the water tanks (22) to position the food near the at least one heater (11) arranged below the food.

15. The cooking apparatus according to any of claims 10 to 14, further comprising a transparent window (24) on at least one of the water tanks (22) to ascertain a water level inside the at least one of the water tanks (22).

16. The cooking apparatus according to claim 14, wherein each end of each of the grill pipes (21) has an inclined part downwardly bent at a predetermined angle and extended from a respective laterally extended part (21a), the horizontally extended part (21d) of each grill pipe extending between respective inclined parts to position the horizontally extended part (21d) lower than the water tanks (22).

17. The cooking apparatus according to any of claims 10 to 16, wherein the water supplied into the grill pipes (21) from the water tanks (22) prevents the grill pipes (21) from overheating when heat is applied to the grill pipes (21), thereby preventing food placed on the grill pipes (21) from burning.

18. A method of manufacturing a grill unit having a plurality of metallic grill pipes (21) and a water tank formed using detachable molds, the method comprising:
cutting a pipe at predetermined intervals to form the plurality of grill pipes (21);
bending and shaping an end of each of the grill pipes (21) to form an upwardly extended part (21b) to contact water in the water tank, a laterally extended part (21a) extending from the upwardly extended part (21b), a sloped part sloping downward from the laterally extended part (21a), and a horizontally extended part (21d) extending from the inclined part;
setting the upwardly extended part (21b) and the laterally extended part (21a) of each of the grill pipes (21) within a cavity formed between the molds;
molding the water tank by injecting molten resin into the cavity to integrally form the grill pipes (21) with the water tank; and
removing the molds from the water tank after the resin has solidified, with the horizontally extended part (21d) being lower than the water tank.

## Patentansprüche

1. Grilleinheit mit:
einer Vielzahl von Grillrohren (21), die aus einem Metallmaterial bestehen und voneinander beabstandet sind; und
Wasserbehältern (22), die mit beiden Enden der Grillrohre (21) verbunden sind, um Wasser in die Grillrohre (21) zu liefern, **dadurch gekennzeichnet, dass** die Wasserbehälter aus einem Harzmaterial bestehen.

2. Grilleinheit nach Anspruch 1, wobei jedes Ende von jedem der Grillrohre (21) einen sich seitlich erstreckenden Teil (21a) mit einer vorbestimmten Länge, einen sich nach oben erstreckenden Teil (21b), der nach oben gebogen ist und sich vom sich seitlich erstreckenden Teil (21a) wegerstreckt und an einer Oberseite desselben geöffnet ist, um mit einem Inneren eines entsprechenden der Wasserbehälter (22) in Verbindung zu stehen, umfasst.

3. Grilleinheit nach Anspruch 2, wobei jeder der Wasserbehälter (22) einen unteren Teil (22a) und einen Seitenteil (22b) aufweist, wobei der untere Teil (22a) von jedem der wasserbehälter (22), der die Enden der Grillrohre (21) aufnimmt, dicker ist als der Seitenteil (22b).

4. Grilleinheit nach einem vorangehenden Anspruch, welche ferner Abdeckungen (23) jeweils über jedem der Wasserbehälter (22) umfasst, um jeden der Wasserbehälter (22) selektiv zu öffnen und zu schließen.

5. Grilleinheit nach einem vorangehenden Anspruch, wobei jedes der Grillrohre (21) einen sich horizontal erstreckenden Teil (21d) umfasst, auf den Nahrungsmittel gelegt werden und der so gebogen ist, dass er niedriger angeordnet ist als beide Enden der Grillrohre (21), die mit den Wasserbehältern (22) verbunden sind, um die Nahrungsmittel nahe einer Heizquelle zu positionieren, die unter den Nahrungsmitteln angeordnet ist.

6. Grilleinheit nach einem vorangehenden Anspruch, welche ferner ein transparentes Fenster (24) an zumindest einem der Wasserbehälter (22) umfasst, um einen Wasserspiegel innerhalb des mindestens einen der Wasserbehälter (22) festzustellen.

7. Grilleinheit nach einem vorangehenden Anspruch, welche ferner ein transparentes Rohr (25) umfasst, das mit mindestens einem der Wasserbehälter (22) verbunden ist, wobei die Enden des transparenten Rohrs (25) in ein Inneres des Wasserbehälters eintreten, um einen Wasserspiegel innerhalb des mindestens einen der Wasserbehälter (22) festzustellen.

8. Verfahren zur Herstellung einer Grilleinheit unter Verwendung von Metallformen, wobei die Grilleinheit (20) eine Vielzahl von Metallgrillrohren (21) und einen Wasserbehälter aufweist, wobei das Verfahren umfasst:
Befestigen der Enden einer Vielzahl von Grillrohren (21) in mindestens einer der Metallformen, die zum Formen des Wasserbehälters verwendet werden, während die Enden der Grillrohre (21) in der mindestens einen der Metallformen gehalten werden; und
Formen des Wasserbehälters durch Einspritzen von geschmolzenem Harz in die mindestens eine der Metallformen.

9. Grilleinheit-Herstellungsverfahren nach Anspruch 8, welches ferner das Schneiden eines Rohrs in die Vielzahl von Grillrohren (21), wobei jedes Grillrohr eine vorbestimmte Länge aufweist, und das Aufwärtsbiegen der Enden der Grillrohre (21) vor dem Einsetzen und Befestigen der Enden der Grillrohre (21) in die bzw. der mindestens einen der Metallformen umfasst.

10. Kochvorrichtung mit:
einem Gehäuse (10) mit mindestens einer Heizvorrichtung (11); und
einer Grilleinheit (20) nach Anspruch 1, die an einer oberen Oberfläche des Gehäuses (10) montiert ist, um Nahrungsmittel abzustützen.

11. Kochvorrichtung nach Anspruch 10, wobei jedes Ende von jedem der Grillrohre (21) einen sich seitlich erstreckenden Teil (21a) mit einer vorbestimmten Länge, einen sich nach oben erstreckenden Teil (21b), der nach oben gebogen ist und sich vom sich seitlich erstreckenden Teil (21a) wegerstreckt und an einer Oberseite desselben geöffnet ist, um mit einem Inneren eines entsprechenden der Wasserbehälter (22) in Verbindung zu stehen, umfasst.

12. Kochvorrichtung nach Anspruch 11, wobei jeder der Wasserbehälter (22) einen unteren Teil (22a) und einen Seitenteil (22b) aufweist, wobei der untere Teil (22a) von jedem der Wasserbehälter (22), der die Enden der Grillrohre (21) aufnimmt, dicker ist als der Seitenteil (22b).

13. Kochvorrichtung nach einem der Ansprüche 10 bis 12, welche ferner Abdeckungen (23) jeweils über jedem der Wasserbehälter (22) umfasst, um jeden der Wasserbehälter (22) selektiv zu öffnen und zu schließen.

14. Kochvorrichtung nach einem der Ansprüche 10 bis 13, wobei jedes der Grillrohre (21) einen sich horizontal erstreckenden Teil (21d) aufweist, auf den Nahrungsmittel gelegt werden und der so gebogen ist, dass er niedriger angeordnet ist als beide Enden der Grillrohre (21), die mit den Wasserbehältern (22) verbunden sind, um die Nahrungsmittel nahe der mindestens einen Heizvorrichtung (11) zu positionieren, die unter den Nahrungsmitteln angeordnet ist.

15. Kochvorrichtung nach einem der Ansprüche 10 bis 14, welche ferner ein transparentes Fenster (24) an mindestens einem der Wasserbehälter (22) umfasst, um einen Wasserspiegel innerhalb des mindestens einen der Wasserbehälter (22) festzustellen.

16. Kochvorrichtung nach Anspruch 14, wobei jedes Ende von jedem der Grillrohre (21) einen geneigten Teil aufweist, der in einem vorbestimmten winkel nach unten gebogen ist und sich von einem jeweiligen sich seitlich erstreckenden Teil (21a) erstreckt, wobei der sich horizontal erstreckende Teil (21d) von jedem Grillrohr zwischen jeweiligen geneigten Teilen erstreckt, um den sich horizontal erstreckenden Teil (21d) niedriger zu positionieren als die Wasserbehälter (22).

17. Kochvorrichtung nach einem der Ansprüche 10 bis 16, wobei das von den Wasserbehältern (22) in die Grillrohre (21) gelieferte Wasser verhindert, dass sich die Grillrohre (21) überhitzen, wenn Wärme auf die Grillrohre (21) aufgebracht wird, wodurch verhindert wird, dass auf den Grillrohren (21) liegende Nahrungsmittel anbrennen.

18. Verfahren zur Herstellung einer Grilleinheit mit einer Vielzahl von Metallgrillrohren (21) und einem Wasserbehälter, der unter Verwendung von lösbaren Formen ausgebildet wird, wobei das Verfahren umfasst:
Schneiden eines Rohrs in vorbestimmten Abständen, um die Vielzahl von Grillrohren (21) auszubilden;
Biegen und Formen eines Endes von jedem der Grillrohre (21), um einen sich nach oben erstreckenden Teil (21b) für den Kontakt mit Wasser im Wasserbehälter, einen sich seitlich erstreckenden Teil (21a), der sich von dem sich nach oben erstreckenden Teil (21b) erstreckt, einen abgeschrägten Teil, der nach unten von dem sich seitlich erstreckenden Teil (21a) abfällt, und einen sich horizontal erstreckenden Teil (21d), der sich vom geneigten Teil erstreckt, auszubilden;
Einsetzen des sich nach oben erstreckenden Teils (21b) und des sich seitlich erstreckenden Teils (21a) von jedem der Grillrohre (21) in einen zwischen den Formen ausgebildeten Hohlraum;
Formen des Wasserbehälters durch Einspritzen von geschmolzenem Harz in den Hohlraum, um die Grillrohre (21) mit dem Wasserbehälter einteilig auszubilden; und
Entfernen der Formen vom Wasserbehälter, nachdem sich das Harz verfestigt hat, wobei der sich horizontal erstreckende Teil (21d) niedriger liegt als der Wasserbehälter.

## Revendications

1. Une unité de gril, comprenant :
- une pluralité de tubes de gril (21) réalisés en un matériau métallique et espacés l'un de l'autre ; et
- des réservoirs d'eau (22) reliés aux deux extrémités des tubes de gril (21), pour alimenter en eau les tubes de gril (21), **caractérisée en ce que** les réservoirs d'eau sont réalisés en un matériau de résine (synthétique).

2. L'unité de gril selon la revendication 1, dans laquelle chaque extrémité de chacun des tubes de gril (21) comprend une partie (21a) étendue latéralement d'une longueur prédéterminée, une partie (21b) étendue vers le haut repliée vers le haut et s'étendant à partir de la partie (21 a) étendue latéralement et ouverte à sa partie supérieure pour faire interface avec l'intérieur de l'un correspondant des réservoirs d'eau (22).

3. L'unité de gril selon la revendication 2, dans laquelle chacun des réservoirs d'eau (22) présente une partie inférieure (22a) et une partie latérale (22b), la partie inférieure (22a) de chacun des réservoirs d'eau (22), qui reçoit les extrémités des tubes de gril (21), étant plus épaisse que la partie latérale (22b).

4. L'unité de gril selon l'une quelconque des revendications précédentes, comprenant en outre des couvercles (23) respectivement sur chacun des réservoirs d'eau (22) pour sélectivement ouvrir et fermer chacun des réservoirs d'eau (22).

5. L'unité de gril selon l'une quelconque des revendications précédentes, dans lequel chacun des tubes de gril (21) comporte une partie (21 b) étendue horizontalement sur laquelle sont placés des aliments et qui est pliée pour être positionnée plus basse que les deux extrémités de tubes de gril (21) reliées aux tubes d'eau (22) pour positionner les aliments à proximité d'une source de chauffage agencée en dessous des aliments.

6. L'unité de gril selon l'une quelconque des revendications précédentes, comprenant en outre une fenêtre transparente (24) sur au moins l'un des réservoirs d'eau (22) pour constater le niveau d'eau à l'intérieur du au moins l'un des réservoirs d'eau (22).

7. L'unité de gril selon l'une quelconque des revendications précédentes, comprenant en outre un tube transparent (25) relié à au moins l'un des réservoirs d'eau (22), les extrémités du tube transparent (25) pénétrant à l'intérieur du tube d'eau pour constater le niveau d'eau à l'intérieur du au moins l'un des réservoirs d'eau (22).

8. Un procédé de fabrication d'une unité de gril en utilisant des moules métalliques, l'unité de gril (20) comportant une pluralité de tubes de gril métalliques (21) et un réservoir d'eau, le procédé comprenant les étapes consistant :
- à fixer les extrémités d'une pluralité de tubes de gril (21) dans au moins l'un des moules métalliques utilisés pour mouler le réservoir d'eau, tout en maintenant les extrémités des tubes de gril (21) dans le au moins l'un des moules métalliques ; et
- à mouler le réservoir d'eau en injectant de la résine fondue dans le au moins l'un des moules métalliques.

9. Le procédé de fabrication de l'unité de gril selon la revendication 8, comprenant en outre l'étape consistant à couper un tube dans la pluralité de tubes de gril (21), chaque tube de gril présentant une longueur prédéterminée, et à replier vers le haut les extrémités des tubes de gril (21) avant d'insérer et de fixer les extrémités des tubes de gril (21) dans le au moins l'un des moules métalliques.

10. Un appareil de cuisson, comprenant :
- une armoire (10) comportant au moins un organe de chauffage (11) ; et
- une unité de gril (20) selon la revendication 1 montée sur une surface supérieure de l'armoire (10) pour supporter des aliments.

11. L'appareil de cuisson selon la revendication 10, dans lequel chaque extrémité de chacun des tubes de gril (21) comprend une partie (21a) étendue latéralement et d'une longueur prédéterminée, une partie (21b) étendue vers le haut, repliée vers le haut et s'étendant à partir de la partie (21a) étendue latéralement et ouverte à sa partie supérieure pour constituer une interface avec l'intérieur de l'un correspondant des réservoirs d'eau (22).

12. L'appareil de cuisson selon la revendication 11, dans lequel chacun des réservoirs d'eau (22) présente une partie inférieure (22a) et une partie latérale (22b), la partie inférieure (22a) de chacun des réservoirs d'eau (22), qui reçoit les extrémités des tubes de gril (21), étant plus épaisse que la partie latérale (22b).

13. L'appareil de cuisson selon l'une quelconque des revendications 10 à 12, comprenant en outre des couvercles (23) sur respectivement chacun des réservoirs d'eau (22), pour sélectivement ouvrir et fermer chacun des réservoirs d'eau (22).

14. L'appareil de cuisson selon l'une quelconque des revendications 10 à 13, dans lequel chacun des tubes de gril (21) comporte une partie (21d) étendue horizontalement sur laquelle est placée de la nourriture et qui est pliée pour être positionnée plus bas que les deux extrémités des tubes de gril (21) reliées aux réservoirs d'eau (22) pour positionner les aliments à proximité du au moins un organe de chauffage (11) agencé en dessous des aliments.

15. L'appareil de cuisson selon l'une quelconque des revendications 10 à 14, comprenant en outre une fenêtre transparente (24) sur au moins l'un des réservoirs d'eau (22) pour constater le niveau d'eau à l'intérieur du au moins l'un des réservoirs d'eau (22).

16. L'appareil de cuisson selon la revendication 14, dans lequel chaque extrémité de chacun des tubes de gril (21) présente une partie inclinée pliée vers le bas selon un angle prédéterminé et s'étendant à partir d'une partie respective (21a) étendue latéralement, la partie étendue horizontalement (21 d) de chaque tube de gril s'étendant entre des parties respectives inclinées pour positionner la partie étendue horizontalement (21 d) plus bas que les réservoirs d'eau (22).

17. L'appareil de cuisson selon l'une quelconque des revendications 10 à 16, dans lequel l'eau fournie dans les tubes de gril (21) à partir des réservoirs d'eau (22) empêchent les tubes de gril (21) de surchauffer lorsque de la chaleur est appliquée aux tubes de gril (21), de sorte à empêcher les aliments placés sur les tubes de gril (21) de brûler.

18. Un procédé de fabrication d'une unité de gril comportant une pluralité de tubes de gril métalliques (21) et un réservoir d'eau formé en utilisant des moules détachables, le procédé comprenant les étapes consistant :
- à découper un tube à des intervalles prédéterminés pour former la pluralité de tubes de gril (21) ;
- à plier et à former une extrémité de chacun des tubes de gril (21) pour former une partie (21b) étendue vers le haut pour venir au contact de l'eau dans le réservoir d'eau, une partie (21a) étendue latéralement s'étendant à partir de la partie (21b) étendue vers le haut, une partie inclinée s'inclinant vers le bas à partir de la partie (21a) étendue latéralement, et une partie (21d) étendue horizontalement s'étendant à partir de la partie inclinée ;
- à placer la partie (21b) étendue vers le haut et la partie (21a) étendue latéralement de chacun des tubes de gril (21) dans une cavité formée entre les moules ;
- à mouler le réservoir d'eau en injectant de la résine fondue dans la cavité pour former de façon monobloc les tubes de gril (21) avec le réservoir d'eau ; et
- à enlever les moules du réservoir d'eau après que la résine se soit solidifiée, la partie (21d) étendue horizontalement étant plus basse que le réservoir d'eau.
